# EUROPEAN PATENT APPLICATION

(11) **EP 1 755 051 A1**
(43) Date of publication of application: **21.02.2007**
(21) Application number: 05255033.2
(22) Date of filing: 15.08.2005
(51) Int. Cl.: G06F 17/30

(54) **Method and apparatus for accessing data using a symbolic representation space**

(71) Applicant: Mitsubishi Electric Information Technology Centre Europe B.V., Guildford, Surrey GU2 5YD (GB); MITSUBISHI DENKI KABUSHIKI KAISHA, Chiyoda-ku Tokyo 100-8310 (JP)
(72) Inventor: Paschalakis, Stavros, Guildford Surrey GU1 2LT (GB); O'Callaghan, Robert J., Guildford Surrey GU2 4LD (GB)
(74) Representative: Whitlock, Holly Elizabeth Ann

(57) **Abstract**

A method of browsing data items using an n-dimensional array of symbols, where n is greater than or equal to 1, each symbol corresponding to at least one data item, using selecting means movable through the n-dimensional array and capable of selecting points in the array including where no symbol is located, comprises selecting at least one symbol and the corresponding data item according to the location of the selecting means.

## Description

The invention relates to a method and apparatus for browsing and accessing very large amounts of data, such as images and video clips.

The simplest scheme one may employ for the purpose of browsing a set of data, such as images or video, is to show users one or more items at a time and allow them to move to the next or previous items using some directional controls, until the items or interest are identified. Such a simple linear navigation scheme, however, is becoming increasingly inflexible in the context of modem digital imaging and video equipment, such as sophisticated digital cameras or smart digital video recording and editing systems.

In patent application US 2002/0140746 A1, "Image Browsing using Cursor Positioning", by Gargi for the HEWLETT-PACKARD COMPANY, published Oct. 3 2002, a method is presented for the browsing of images. According to the invention, a subset of the available images is presented to the user as an image stack. An image stack is a series of partially overlapping images. By hovering a cursor or pointer over the stack images, individual stack images become active and fully visible, for example by being "raised" above the stack or by being displayed in a separate area of the display. An active stack image may then be selected for "permanent" viewing, i.e. independent of the position of the cursor of pointer, in a separate area of the display. If the user does not identify the image of interest in the stack, the user may move to the next stack or previous stack. Thus, the invention relies heavily on the partial overlapping of the images in the stack, in order to increase the number of images that may be placed on the display unit at any one time. The extent of the overlapping must be such that users of the invention may still assess the overall contents of the stack, and then further examine only those images that may be of interest by hovering the cursor or pointer over them. This requirement places a great constraint on the extent of image overlapping. For example, assume a display unit that can normally display three identically sized images in their entirety. Then, "hiding" 40% of each image below the previous image for the formation of the image stack will increase the capacity of the display unit by two images, raising it to a total of five images. Thus, for a digital camera device that can hold 1000 images the user may need to access up to 200 individual stacks to identify an image. Increasing the amount of overlap will reduce the number of image stacks, but then the user will not be able to assess the content of each stack in a single view and will have to hover the cursor over most, if not all, of the stack images. Furthermore, according to US 2002/0140746 A1, users may manually create and maintain a directory tree for all the images, and then browse the image stacks for a specific part of the tree. However, this simply alleviates the problem of stack proliferation only up to a point. For instance, according to the previous example, a directory of 100 images will give rise to 20 image stacks, which are still too many for efficient browsing. A more detailed directory tree will alleviate the problem further, but this will give rise to a number of other problems. First, the problem of efficiently displaying and navigating the actual image data will be replaced by the problem of efficiently displaying and navigating the directory tree itself. In addition, manually creating and maintaining such a directory tree is troublesome for users. Furthermore, it is almost certain that users will time and again take new images, delete old images and decide that the existing directory tree does not adequately represent the image data, in which case they will have to manually recreate it. Furthermore, in order to create an elaborate directory tree users will be required to segregate the image data into distinct subdirectories and categories when, in fact, image data may be organised in multiple ways and the boundaries between categories are not usually clear-cut. Thus, the invention improves upon the simple linear navigation scheme, but only in a limited fashion.

In patent application US 2003/0086012 A1, "Image Browsing User Interface Apparatus and Method", by Stavely and Battles for the HEWLETT-PACKARD COMPANY, published May 8 2003, another method is presented for the browsing of images. According to the invention, images are organised into individual images and groups of images, where a group of images may contain all the frames of a video, or all the images captured in a single burst, or may be user defined. Each group of images is represented by a preferred image, which may be determined automatically or manually. The individual images and preferred images give rise to the set of primary images. For the purpose of browsing, a display unit may display a set of thumbnails in a grid, for example nine thumbnails in a 3x3 grid. One line in a fixed direction, for example the middle horizontal line of thumbnails, displays the primary images and the user may move from one primary image to the next or previous using horizontal directional control buttons. If the current primary image is the preferred image of a group rather than an individual image, then there will be thumbnails "hanging" above and below it, and the user may move through the images in the group using vertical directional control buttons. In an alternative embodiment, the user uses the vertical directional control buttons to simply "move in and out" of groups, and the horizontal directional control buttons to move through the images of a group. Therefore, this method is also a limited improvement upon the simple linear navigation scheme. In order to identify the data of interest users may have to move through the entire primary image list and, possibly, through parts of one or more image groups. Note that while the creation of image groups may increase the efficiency of the navigation, the time saved during navigations will be spent in the manual creation and maintenance of the user-defined groups, which is a troublesome process that will need to be repeated time and again as the data changes over time. Furthermore, as previously stated, grouping of images may be useful in certain circumstances but requires users to perform a strict segregation of the data when, in practice, such a segregation may not be feasible or desirable.

In patent application US 2002/0075322 A1, "Timeline-Based Graphical User Interface for Efficient Image Database Browsing and Retrieval", by Rosenzweig and Prabhu for the EASTMAN KODAK COMPANY, published Jun. 20 2002, another method is presented for the browsing of images. That browsing method is hierarchical with at least three levels. The top level comprises image groups created according to the time of capture of the images, for example according to the year of capture, and those groups are organised in an 1-dimensional timeline. Each group is represented by an icon, the size of which is proportionate to the number of images in the group. Selecting one of the groups allows the user to move to the second level and view a division of the selected group into subgroups on another 1-dimensional timeline, for example according to the month of capture. These subgroups are again represented by icons whose size is proportionate to the number of images in the subgroup. It is also possible to user other grouping criteria at the second level, such as location of capture, based on metadata created by an on-board GPS or entered manually, people of interest in the pictures, again based on automatically or manually created metadata, and so on, to create other 1-dimensional ordered display metaphors. Selecting one of the subgroups may then result in the display of its constituent images as thumbnails in a grid, or in the display of a third display metaphor of sub-subgroups according to some criteria, which may have yet another display metaphor below it and so on. Furthermore, a user may decide at any point to stop traversing the hierarchy and simply display all the images of a given group or subgroup on the screen. Thus the invention, allows users to navigate a set of images using a hierarchical decomposition of the set according to multiple criteria, using a single criterion at a time and starting with the "data/time of capture" criterion. While improving upon the simple linear navigation process, there are certain drawbacks to this method. In order to achieve a hierarchical decomposition the images must be segregated into distinct categories when, in fact, image data may be organised in multiple ways and the boundaries between categories are usually "fuzzy". For example, categorisation according to the time of capture, i.e. one category for the 06:00 - 12:00 images, one for the 12:00 - 18:00 images and so on, is highly artificial and will result in the splitting of images captured in a single session around noon into two different categories. Similarly, categorisation according to the person that the image depicts, i.e. one category for person 1, one for person 2 and so on, does not take into account how many people are in the image, the background, etc. On the other hand, if the hierarchy contains too few categories then it will not offer any significant improvement upon the simple linear navigation scheme.

In patent US 6,538,698 B1, "Method and System for Sorting Images in an Image Capture Unit to Ease Browsing Access", by Anderson for FlashPoint Technology Inc., Mar. 25 2003, another method is presented for the browsing of images. That method is also an extension of the simple linear navigation scheme based on the grouping of images. More specifically, the invention relies on the grouping of the available image data according to automatically or manually created metadata, such as time of capture, occasion captured in images, etc. Then, images are presented to the users in a sequence, and users may navigate from one image to the next or previous image, or jump from one group to the next or previous group. As discussed earlier, one problem with such an approach is that the grouping of images may be useful in certain circumstances but requires users to perform a strict segregation of the data when, in practice, such a segregation may not be feasible or desirable. In addition, even if the images have been successfully grouped, in order to identify the data of interest users may have to linearly move through the entire group list and, possibly, through parts of one or more image groups.

The present invention addresses problems of the prior art as outlined above.

Aspects of the invention are set out in the accompanying claims.

An embodiment of the invention comprises, given a set of data, such as images or videos, representing data or groups of data using symbols; arranging the symbols in a symbolic representation space and displaying said symbolic representation space to the user; allowing users to move a pointer or cursor to any part of the symbolic representation space; upon receiving user input or automatically, marking those symbols which are considered relevant based on the position of the cursor in the symbolic representation; and, upon receiving user input or automatically, displaying the data corresponding to the highlighted symbols, preferably in conjunction with the symbolic representation space.

Advantages of embodiments of the invention include allowing users to view a global representation of the data, to access specific data in a non-linear fashion, to locate and view the data of interest without losing sight of the global representation space, and easily to learn said global representation and the interrelations between the data to further increase the ease and speed of their browsing as they become more familiar with the method and apparatus. The invention is particularly useful when the capabilities of the display unit of a system are not sufficient to display all the available data, so as to enable the user to quickly identify and view the data which is of particular interest.

Embodiments of the invention will be described with reference to the accompanying drawings of which:
Fig. 1 shows a first symbolic representation space;
Fig. 2 shows a second symbolic representation space;
Fig. 3 shows third symbolic representation space;
Fig. 4 shows a browsing apparatus;
Figs. 5-7 illustrate a browsing method using the apparatus of Fig. 4 and the representation space of Fig. 1;
Fig. 8 illustrates the browsing method with an alternative display format;
Fig. 9 illustrates the browsing method with another alternative display format;
Fig. 10 illustrates the browsing method with another alternative display format;
Fig. 11 illustrates the browsing method with display of an image corresponding to a different symbol type;
Fig. 12 illustrates a modified version of the symbolic representation space of Fig. 1;
Figs. 13-15 illustrate a browsing method using the apparatus of Fig. 4 and the representation space of Fig. 2;
Fig. 16 illustrates the browsing method with an alternative display format;
Figs. 17-21 illustrate a browsing method using the apparatus of Fig. 4 and the representation space of Fig. 3.

In one embodiment of the invention, the set of data to be browsed comprises visual data, such as images or video segments. For example, the invention may be implemented inside a digital image and/or video camera to allow efficient browsing of the images and/or videos that a user captures and stores in the memory of the camera. As another example, the invention may be implemented inside an intelligent digital video editing apparatus, such as a digital video recorder, to allow efficient browsing of a collection of videos or of different segments of a single video. It should be noted, however, that these examples are given for illustrative purposes only and do not in any way limit the scope of the invention.

For illustrative purposes, this description will concentrate on the representation and browsing of visual data. However, those skilled in the art will appreciate that the invention may be used for the browsing of other types of data, such as audio data or audio-visual data, or mixtures of data types.

Data items are represented using symbols. There is no restriction on what a symbol may be. For example, in one embodiment of the invention, a symbol is a single pixel of any colour. In another embodiment of the invention, a symbol is a group of pixels of any colour and in any formation. In yet another embodiment of the invention, a symbol is a group of pixels, preferably in a compact formation, the colour(s) of which represent the dominant colour(s) of the image or video data item it represents. In the case of a video data item, the dominant colour(s) may relate to single frame, for example the first frame or a key frame, or a plurality of frames, or may be the dominant colour(s) in the entire video. In yet another embodiment of the invention, a symbol is a subsampled or thumbnail version of the image or video data item it represents. In the case of a video data item, the thumbnail may correspond to a single frame of the video, for example the first frame or a key frame, or may be a mosaic of a plurality of frames, or may be a video item in its own right. In yet another embodiment of the invention, a symbol is an icon or a graphic of a desired semantic connotation.

Analogously, symbols may also be used to represent entire groups of data items.

In representing a data set comprising a plurality of data items using symbols, different embodiments of the invention may use a single or a plurality of symbol types.

The primary aim of the symbols is to allow the efficient presentation of the data set to a user of the invention. Thus, the symbols do not actually replace the data they represent, but coexist with it, for example as metadata. In a preferred embodiment of the invention, the type(s) of symbols, for example graphical icons or dominant colour pixels groups, and the specific incarnations of the type(s) of symbols, for example large or small, are manually and/or automatically chosen and/or adjusted so as to facilitate the efficient presentation of the data set to the user.

The presentation of the data set to the user is achieved via a symbolic representation space. The symbolic representation space is an n-dimensional spatial arrangement of the symbols representing the data items, where *n* ≥ 1.

In one embodiment of the invention, the arrangement of the data symbols in the symbolic representation space depends partially or fully on the interrelations between the data items, for example the similarity between each data item and at least one other data item.

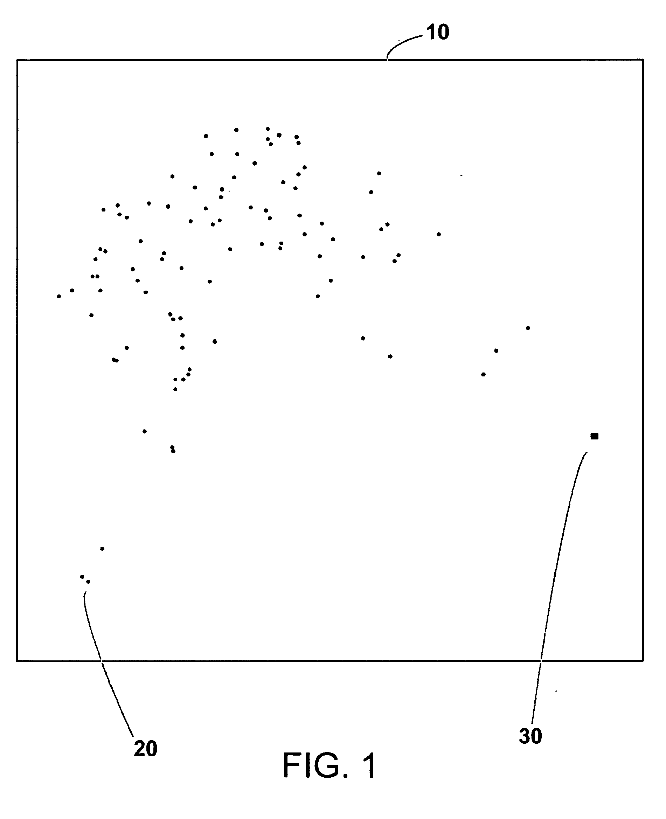

Figure 1 shows a 2-dimensional symbolic representation space 10 which depends fully on the interrelations between the data items. In this illustration, two symbol types are used, namely a small circular shape 20 and a small square shape 30. In one embodiment of the invention, such a symbolic representation space may be created as follows.

Firstly, the data items are analysed by appropriate automatic algorithms to extract numerical descriptions of each object. For images and videos, for example, these descriptions can be obtained by analysing the colour, texture or other visual characteristics of the picture. A symbolic representation may then be derived, based on the numerical description. For instance, the values of the description could be used as the coordinates in the representation space. If the dimensionality of the representation is less than that of the description, mathematical techniques such as Principal Component Analysis (PCA) can be applied to reduce the dimensionality to the desired degree.

As an alternative to directly embedding the numerical descriptions of each item in the representation space, the descriptions may be further processed to extract the most salient interrelations. In one procedure, numerical values are computed, representing the results of comparisons between pairs of data items. For example, where the numerical descriptions capture visual characteristics, each numerical value would represent the visual similarity of two images. The similarities can be calculated by the methods most appropriate to the descriptions or the type of data item.

For a set of data items, these comparison results can then be arranged into a square matrix, which encodes all information about the interrelations between items. A variety of mathematical techniques may be used to analyse this kind of matrix, to produce the coordinates of each item in the appropriate symbolic space. The resulting symbolic space captures a view of the items that is, in some sense, optimal with respect to the similarity data. Examples of such algorithms include Multi-Dimensional Scaling (MDS), Self-Organising Maps (SOM) and Laplacian Eigenmaps.

Extensions to the procedure are possible, allowing the addition of items to the set or efficient computation of the representation.

Examples of methods as outlined above are described in our copending application entitled 'Mutual-Rank Similarity Space for Navigating in Image Databases', Attorney reference J47859EP, the contents of which are incorporated herein by reference.

Note that, since the arrangement of the data symbols in this embodiment depends only on the interrelations among their underlying data items, the absolute positions of the symbols in the space are not significant but their positions relative to each other are. This is why there are no axes for the symbolic representation space of Figure 1.

In another embodiment of the invention, the arrangement of the data symbols in the symbolic representation space depends partially or fully on the values of certain metadata or information relating to each data item, for example the average intensity level or time of capture.

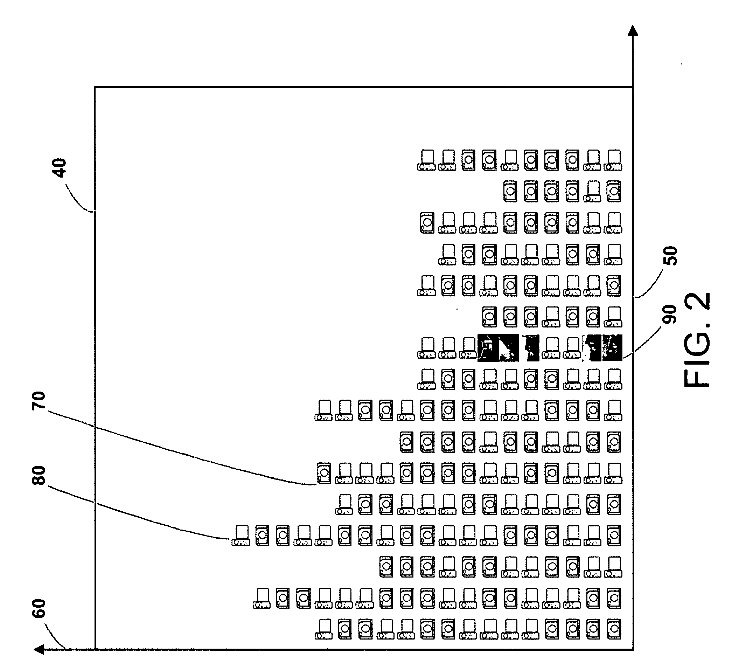

Figure 2 shows a 2-dimensional symbolic representation space **40** which depends fully on the values of certain metadata or information relating to each data item. In this illustration, three symbol types are used, namely a graphical icon denoting image data **70,** a graphical icon denoting video data **80,** and a micro-thumbnail for image or video data **90.** There is a great multitude of metadata that the x (horizontal) axis **50** and y (vertical) axis **60** could be mapped to. These include, but are not limited to, the time of capture of an image or video, the temporal position of a video segment inside a larger video, for example a specific scene inside a film, the average or dominant intensity or hue of an image or video, the temporal activity of a video, etc. In addition to such scalar metadata types, non-scalar metadata may also be mapped onto scalars and subsequently mapped onto an axis. For example, a categorisation of image data according to occasion, such as birthday, wedding, holiday, etc. may be internally mapped onto the scalar "Occasion" of values 1, 2, 3, etc., which may then be mapped onto an axis. Although such a categorisation does not in itself form an ideal basis for a browsing system, there are situations where it may be useful. Regarding the mechanism of creation of the metadata for the data items, there are no restrictions. For example, such metadata may be automatically created at the moment of creation of the data item, for example the capture time, or automatically created at a later point, for example a colour descriptor, or manually entered by a user, for example a description of the occasion.

In yet another embodiment of the invention, the arrangement of the data symbols in the symbolic representation space depends partially or fully on the constraints, rules and guidance of a user and/or a designer of the system, in order to achieve a desired visual arrangement.

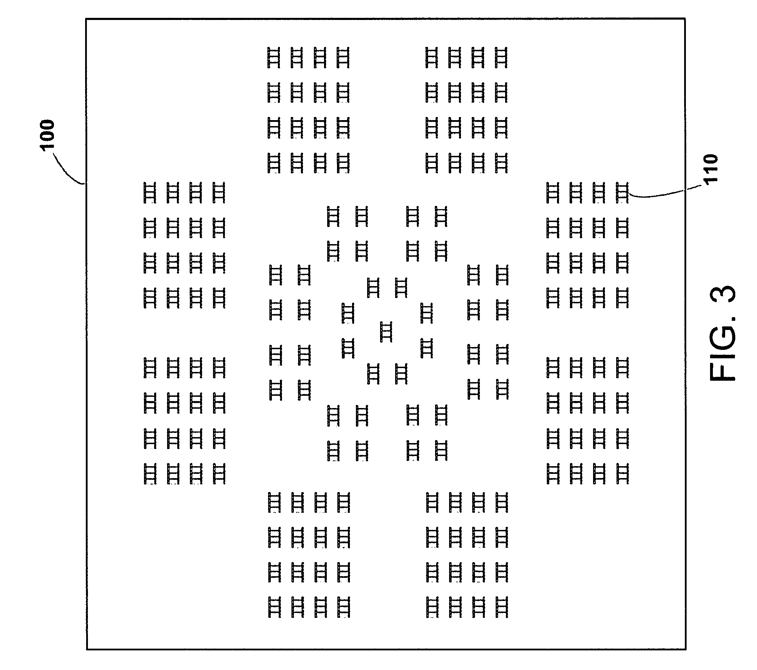

Figure 3 shows a 2-dimensional symbolic representation space **100** which aims to achieve a specific visual arrangement and separation of the symbols. In this illustration, a single symbol type is used, namely an icon **110** for the data items. With such an arrangement, there will usually be a semantic significance attached to the absolute and relative positions of the symbols, but this need not be so.

In alternative embodiments of the invention, the arrangement of the data symbols in the symbolic representation space may depend partially or fully on multiple criteria including but not limited to data interrelations and/or metadata values and/or user/designer-specific rules, constraints and guidance.

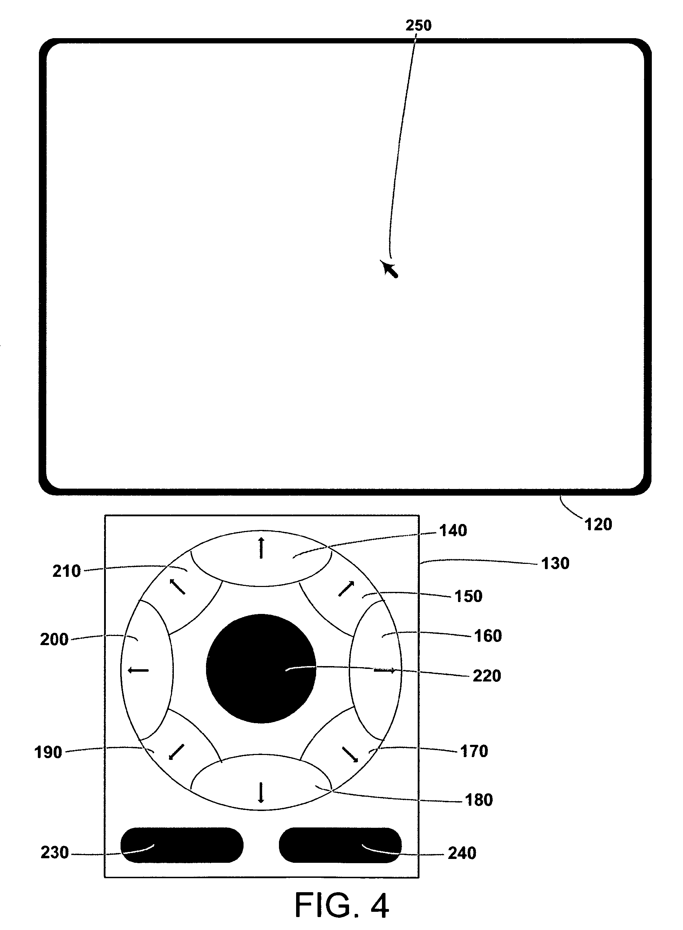

Figure 4 shows browsing apparatus according to an embodiment of the invention comprising a display **120,** a controller **130,** a processor (not shown) and storage (not shown) storing data items. The symbolic representation space and its constituent data items are displayed on the 2-dimensional display **120.** In one embodiment of the invention the pointer or cursor is controlled via a controller **130.** Controller **130** comprises navigation buttons **140, ..., 210** and selection buttons **220,** ..., **240,** and controls a pointer or cursor **250.** In different embodiments of the invention, the controller 120 may comprise a different number of navigation and selection buttons. In other embodiments of the invention, the controller **130** may be replaced by other means of controlling the pointer, such as a mouse, a pen device, a trackball, etc. In other embodiments of the invention, the controller **130,** or its equivalent, does not control a pointer or cursor but allows the user to move from one displayed item, e.g. a data symbol or data item, to another displayed item.

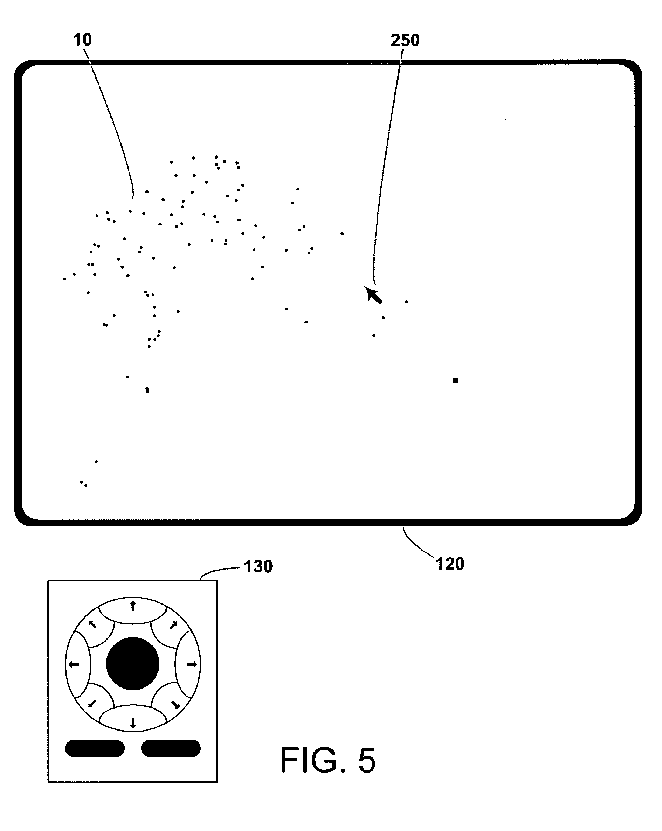

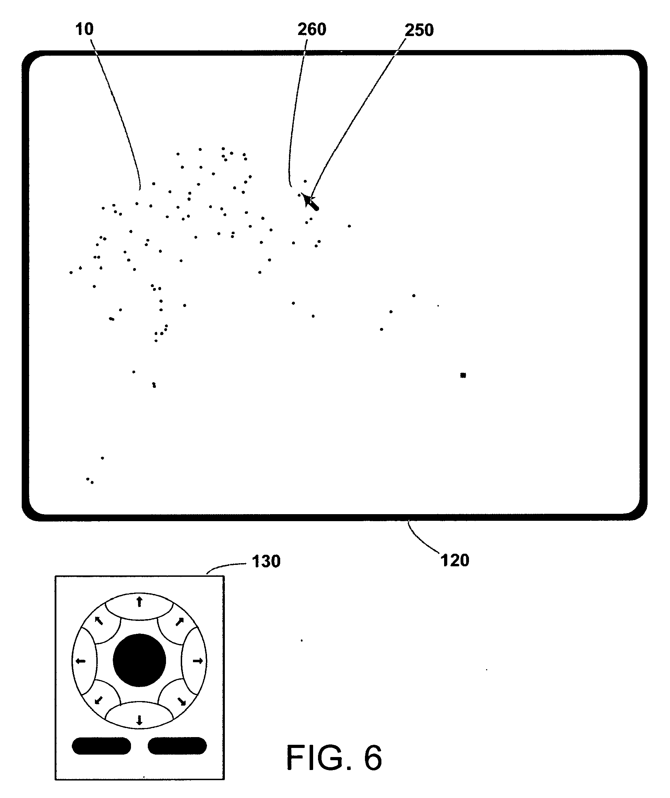

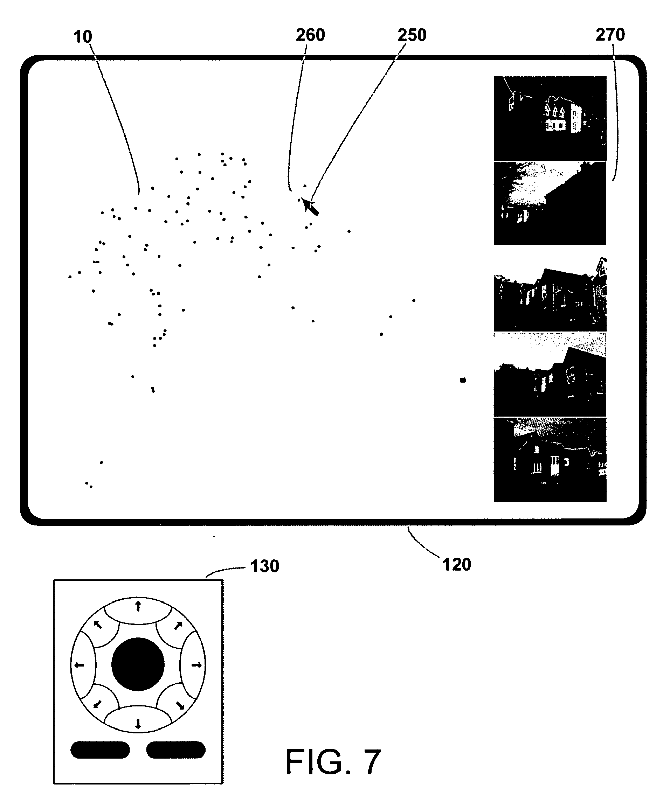

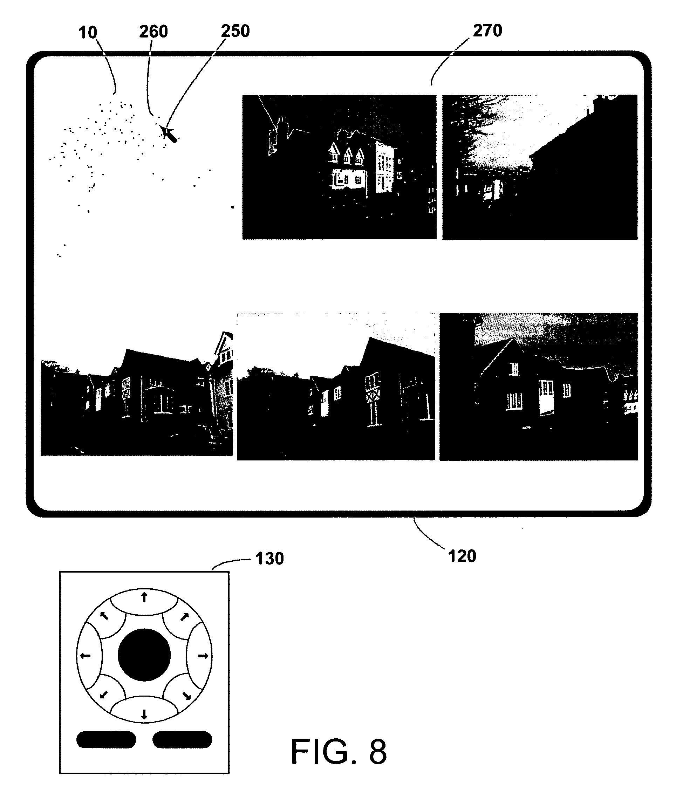

Figures 5 to 8 illustrate a first example of browsing according to the invention. More specifically, Figure 5 shows how the symbolic representation space **10** of Figure 1 may be presented to a user on display **120.** By controlling the cursor, the user may navigate to different parts of the symbolic representation space. As shown in Figure 6, when the cursor is held stationary for a certain amount of time, which may be user controlled, the data symbols **260** which are closest to the cursor become highlighted, for example by changing their colour. Optionally, the data symbol closest to the cursor may be exceptionally highlighted, for example by also drawing a rectangle around it. The total number of data symbols that become highlighted may be user controlled. In another embodiment of the invention, the data symbols may be highlighted by using the appropriate selection button of the controller instead of or in addition to maintaining the cursor stationary for a certain amount of time. In any case, the user may view the data items that the highlighted symbols correspond to, for example as image or video thumbnails. This could be achieved by holding the cursor stationary for another certain amount of time after the data symbols become highlighted and/or by using the appropriate selection button of the controller. In one embodiment of the invention, the data items may replace the symbolic representation space. In a preferred embodiment of the invention, the data items are shown to the user in conjunction with the symbolic representation space. One example of this is shown in Figure 7, where large thumbnails **270** of the data items are displayed in an area of the display not occupied by the symbolic representation space. Alternatively, the data items may overlap the symbolic representation space display region. Another example is shown in Figure 8, where the symbolic representation space display region is reduced in order to allow larger and/or more data items to be displayed to the user. The data items may be ordered in any fashion. For example, the data item whose symbol is closest to the cursor may be displayed first, followed by the other data items according to how close their symbols are to the symbol of the first data item. Optionally, data symbols may be linked to data items, for example by drawing a rectangle of a distinct colour around each data symbol and its corresponding data item. In any case, users may continue to navigate the symbolic representation space so that new data symbols become highlighted and new data items are displayed in the place of the previous ones, and so on. At any point, users may change the focus of the cursor from the symbolic representation space to the data items by using the appropriate selection button. Users will then be able to select data items from the currently displayed data items in order to view them full-screen, transfer them to an external memory device, etc. Changing the focus of the cursor back to the symbolic representation space will then allow users to continue navigating said space and to view other data items.

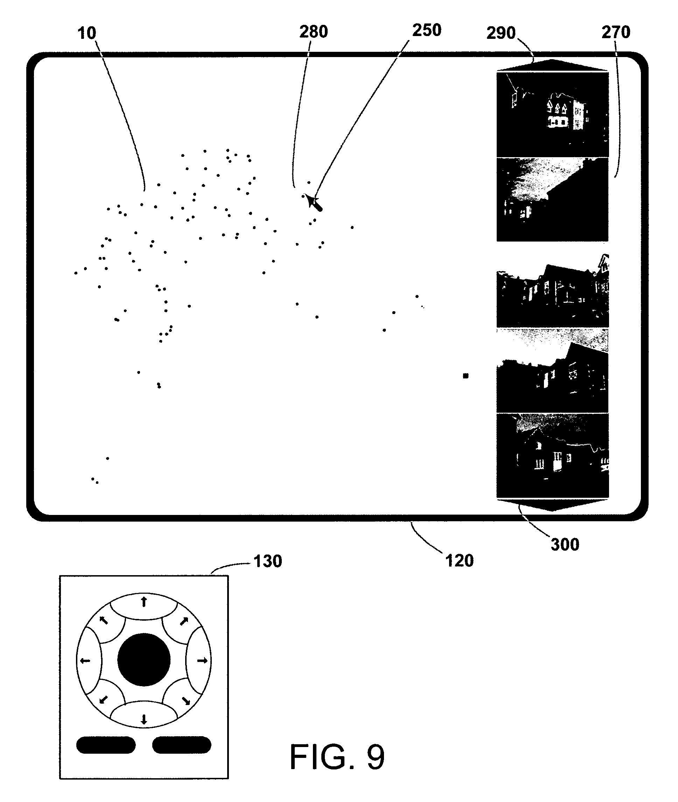

As shown in Figure 9, in an embodiment of the invention if the highlighted symbols **280** correspond to data items the size and/or number of which prevents them from being displayed on a single screen, a subset of them may be displayed first and the user may then request another subset to be displayed and so on. This will be achieved, for example, by the user changing the focus of the cursor to the data items and then selecting one of the special navigation icons **290** and **300.**

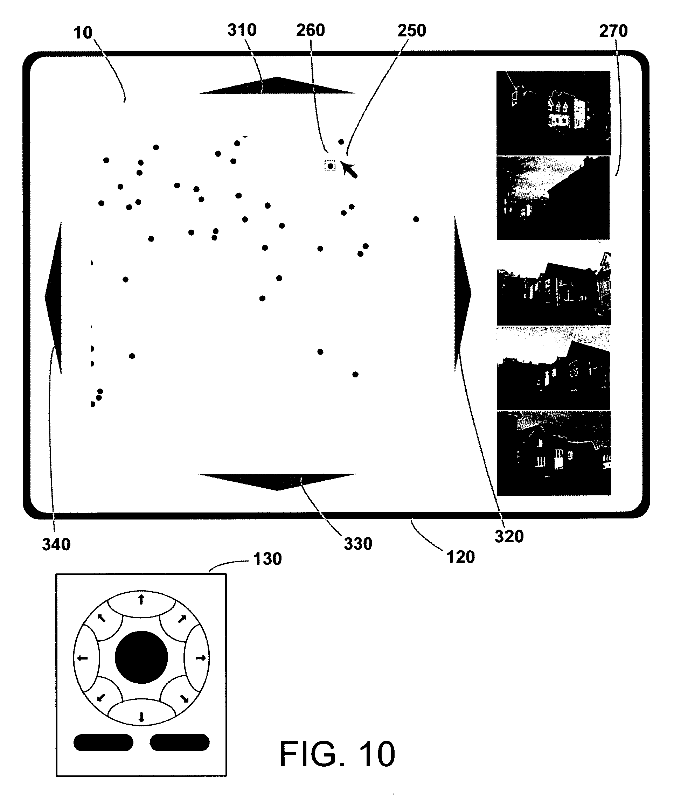

In an embodiment of the invention a user may also be allowed to perform simple operations on the symbolic representation space such as zoom in/out and pan. This is illustrated in Figure 10, where a zoom in operation has been performed and the special navigation icons **310, 320, 330** and **340** allow a user to pan.

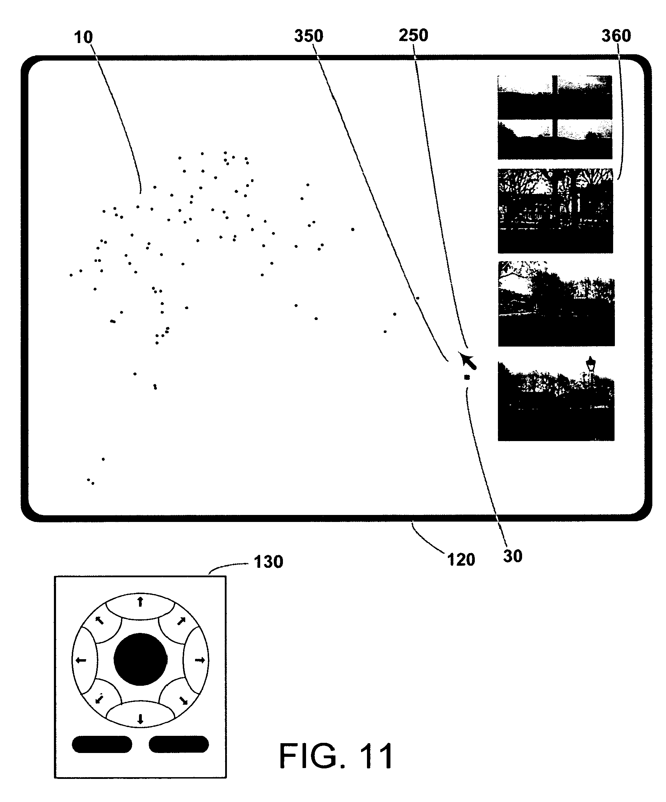

As previously noted, symbols may be used to represent groups of data items as well as individual data items. Although group symbols may be of any type, like data symbols, in a preferred embodiment of the invention the symbols for groups are in some way distinct from data item symbols. This is illustrated in Figure 1, where symbol **30** is used to represent a group of data items and is different from the symbols used to represent individual data items. In Figure 11, the highlighted data symbols **350** that are close to the cursor include the group symbol. In this case, the user may be shown one or more of the data items of the group or a mosaic of some or all of the data items of the group. In this illustration, a mosaic (top picture) is shown to the user in the data display region **360** along with the thumbnails of the data items corresponding to other highlighted symbols.

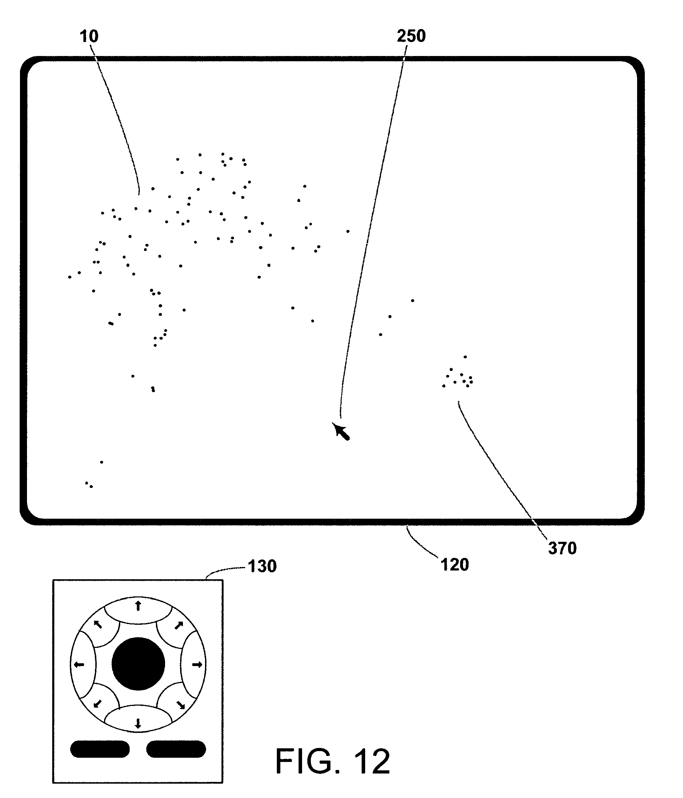

In addition, in an embodiment of the invention users are able to expand a group symbol into the symbols of its constituent data items and/or subgroups. In one embodiment of the invention this expansion takes place in the present symbolic representation space, as shown in Figure 12, where the 10 symbols **370** have replaced the group symbol. In another embodiment of the invention this expansion takes place in a new symbolic representation space for the group which replaces the old one. This new symbolic representation space may or may not be of the same type or using the same arrangement criteria as the one which contains the group symbol.

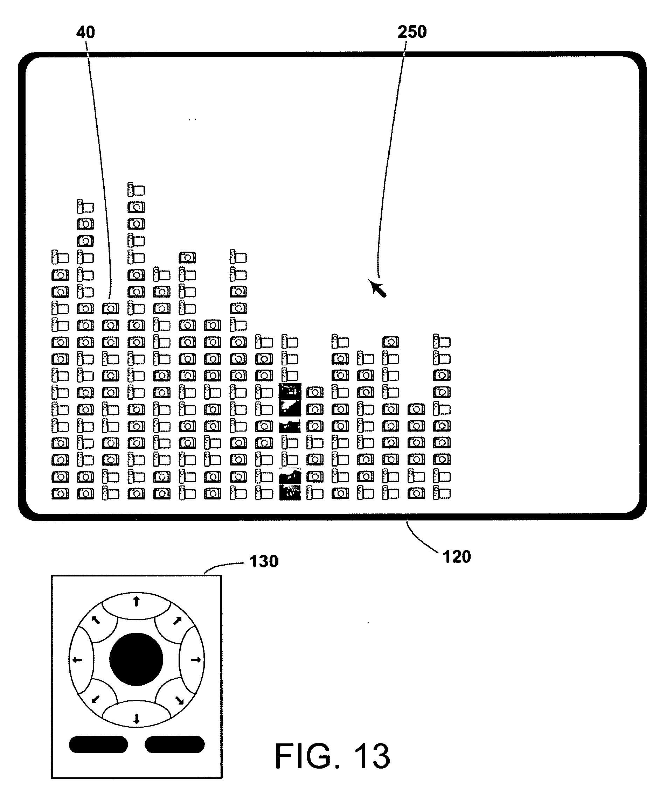

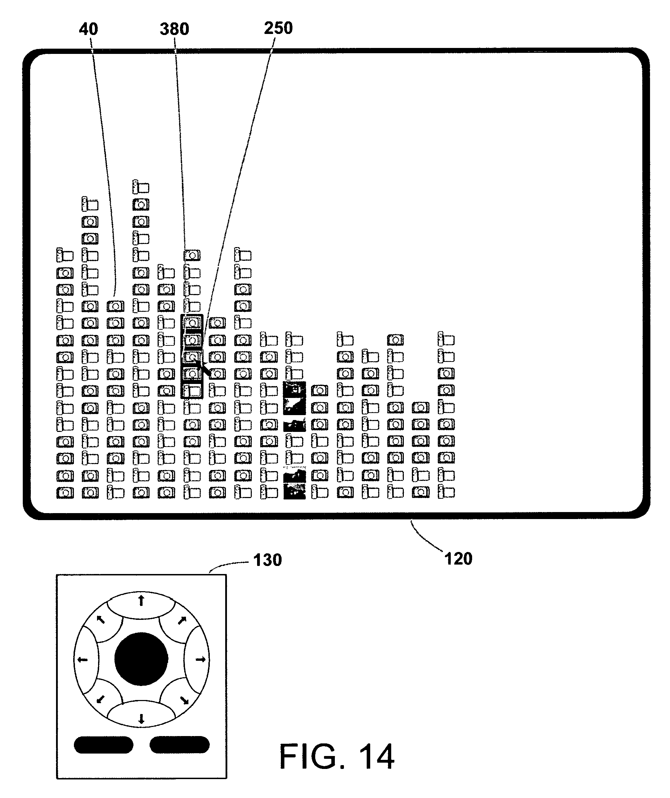

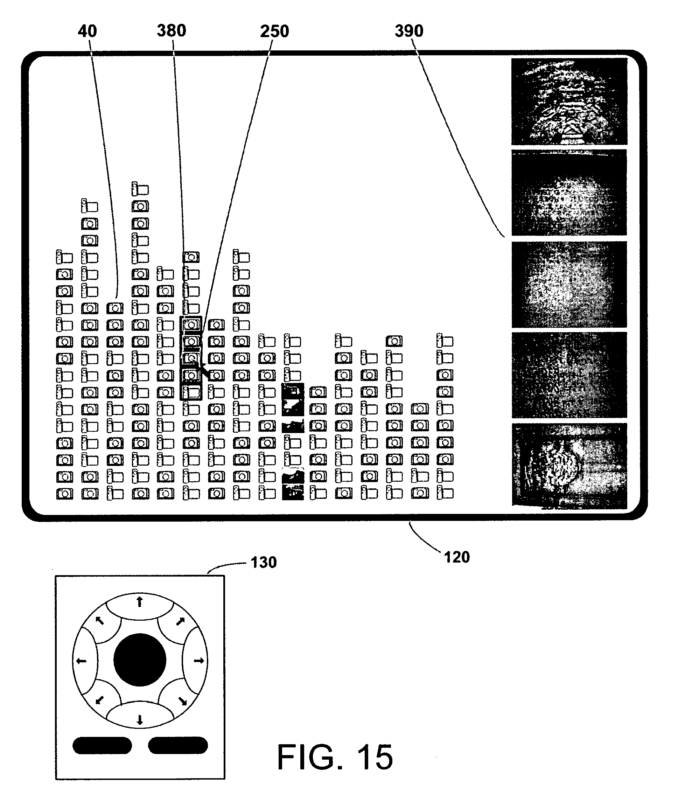

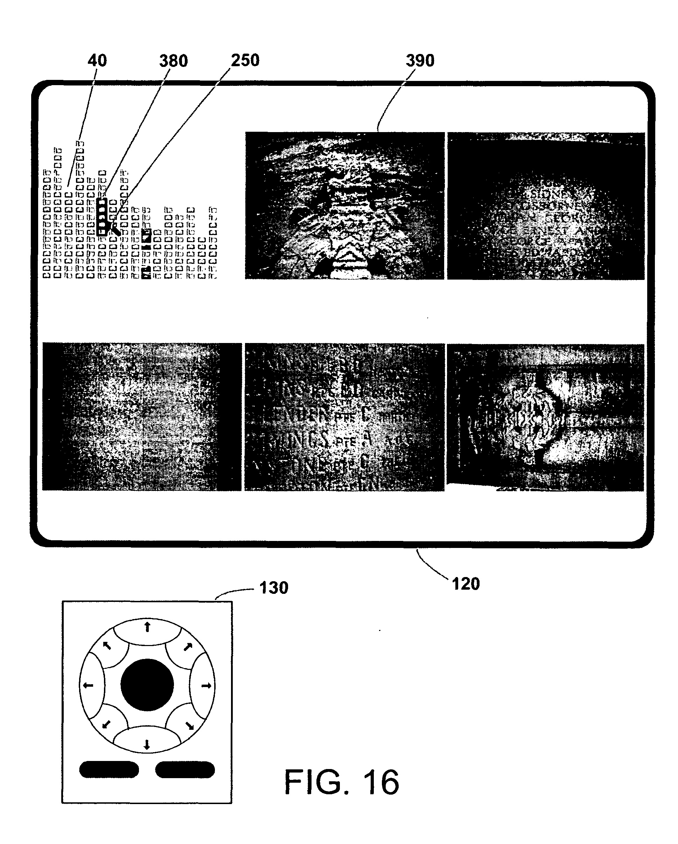

Figures 13 to 16 illustrate a second example of browsing according to the invention. More specifically, Figure 13 shows how the symbolic representation space **40** of Figure 2 may be presented to a user on display **120.** By controlling the cursor the user may navigate to different parts of the symbolic representation space. As shown in Figure 14, and similarly to the previous example, data symbols **380** become highlighted when the cursor is held stationary for a certain user adjustable amount of time and/or by using the appropriate selection button of the controller. In this illustration, the symbol closest to the cursor is highlighted along with the two symbols above it and the two symbols below it. However, the total number of data symbols that become highlighted, as well as their location, may be user controlled. In any case, the user may view the data items that the highlighted symbols correspond to by holding the cursor stationary for another certain amount of time after the data symbols become highlighted and/or by using the appropriate selection button of the controller. In one embodiment of the invention, the data items may replace the symbolic representation space, but in a preferred embodiment of the invention, the data items are shown to the user in conjunction with the symbolic representation space. One example of this is shown in Figure 15, where large thumbnails **390** of the data items are displayed in an area of the display not occupied by the symbolic representation space. Alternatively, the data items may overlap the symbolic representation space display region. Another example is shown in Figure 16, where the symbolic representation space display region is reduced in order to allow larger and/or more data items to be displayed to the user. The data items may be ordered in any predetermined and user adjustable fashion. Optionally, data symbols may be linked to data items, for example by drawing a rectangle of a distinct colour around each data symbol and its corresponding data item. In any case, users may continue to navigate the symbolic representation space so that new data symbols become highlighted and new data items are displayed in the place of the previous ones, and so on. At any point, users may change the focus of the cursor from the symbolic representation space to the data items by using the appropriate selection button. Users will then be able to select data items from the currently displayed data items in order to view them full-screen, transfer them to an external memory device, etc. Changing the focus of the cursor back to the symbolic representation space will then allow users to continue navigating said space and to view other data items.

The various extensions and modifications discussed for the previous browsing example and in accordance with Figures 9 to 12 apply here as well.

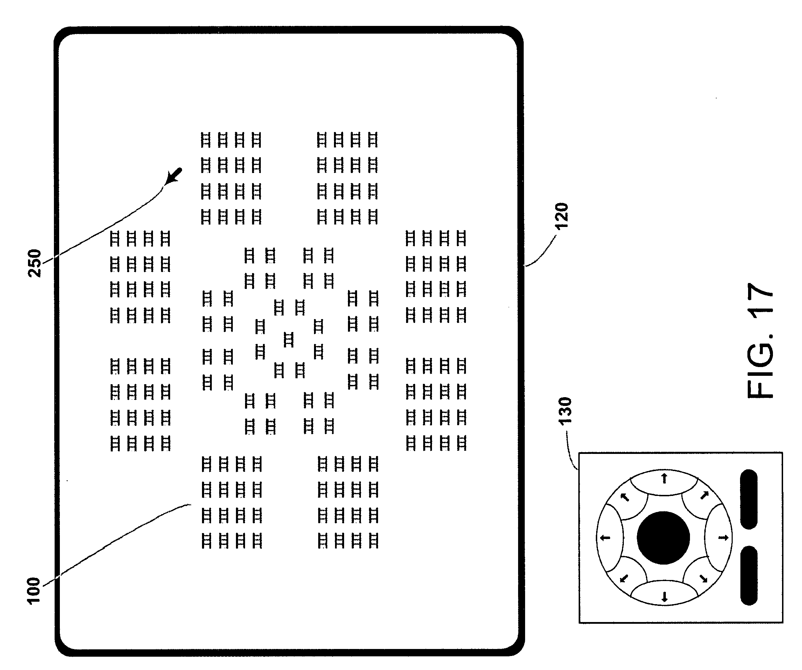

Figures 17 to 21 illustrate a third example of browsing according to the invention. More specifically, Figure 17 shows how the symbolic representation space **100** of Figure 3 may be presented to a user on display **120**.

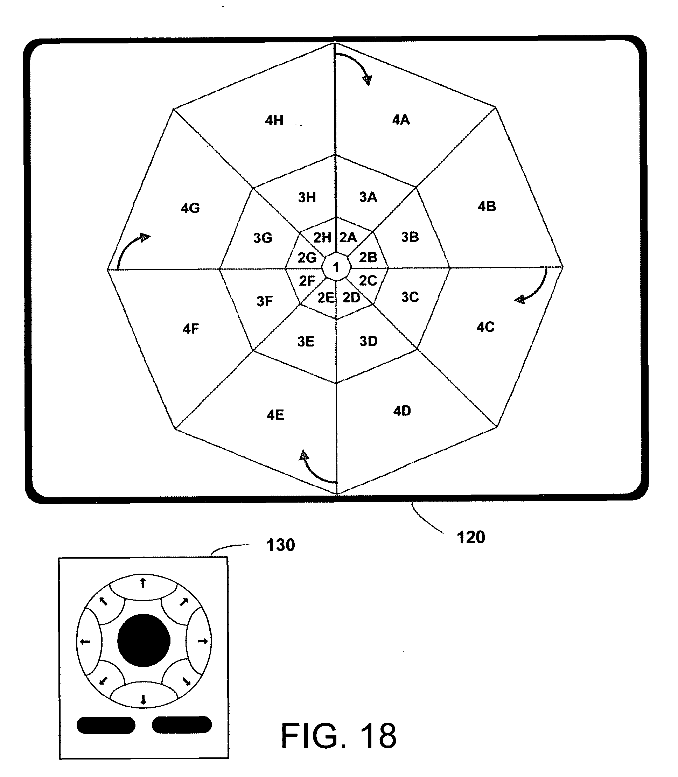

This symbolic representation space is particularly useful for, but not limited to, browsing the contents of a video such as a movie. Each of the symbols in the symbolic representation space represents a video segment at a some level of a hierarchy. This is best illustrated with the aid of Figure 18, which shows the semantic significance of the positioning of the symbols. Viewing Figure 17 in conjunction with Figure 18, the symbol inside *region* **1** corresponds to the entire video being browsed. The symbols inside *regions* **2A** to **2H** correspond to different segments of the video, with the symbol in **2A** corresponding to a segment from the start of the video up to a point, the symbol in **2B** corresponding to a segment from the end of the segment represented by the symbol **of 2A** up to another point, and so on. Then, each of regions **3A** to **3H** contains four symbols which correspond to segments of the segment represented by the symbol in each of regions **2A** to **2H** respectively. For example, in region **3A,** the top-left symbol corresponds to a first segment of the segment represented by the symbol in **2A.** Then, the top-right symbol is a second segment, the bottom-left symbol is a third segment and the bottom-right symbol is a fourth segment. Analogous relations hold between regions **3B** and **2B, 3C** and **2C,** etc. Then, each of regions **4A** to **4H** contains 16 symbols which correspond to segments of the segments represented by the four symbols in each of regions **3A** to **3H** respectively. For example, in region **4A,** the four symbols in the top row correspond to segments of the segment represented by the top-left symbol in region **3A.** Similarly, the symbols in the second row of **4A** correspond to the top-right symbol of **3A,** the symbols in the third row of **4A** to the bottom-left symbol of **3A,** and the symbols in the fourth row **of 4A** to the bottom-right symbol of **3A.** Analogous relations hold between regions **4B** and **3B, 4C** and **3C,** etc. The video segmentation mechanism lies outside the scope of this invention but, for illustrative purposes only, might comprise an automatic video segmentation method which divides a video into structural components (shots), and then groups the shots into a hierarchy of scenes, for example based on visual similarity cues and/or the video timeline. Alternatively, the video segmentation mechanism may rely solely on the video timeline.

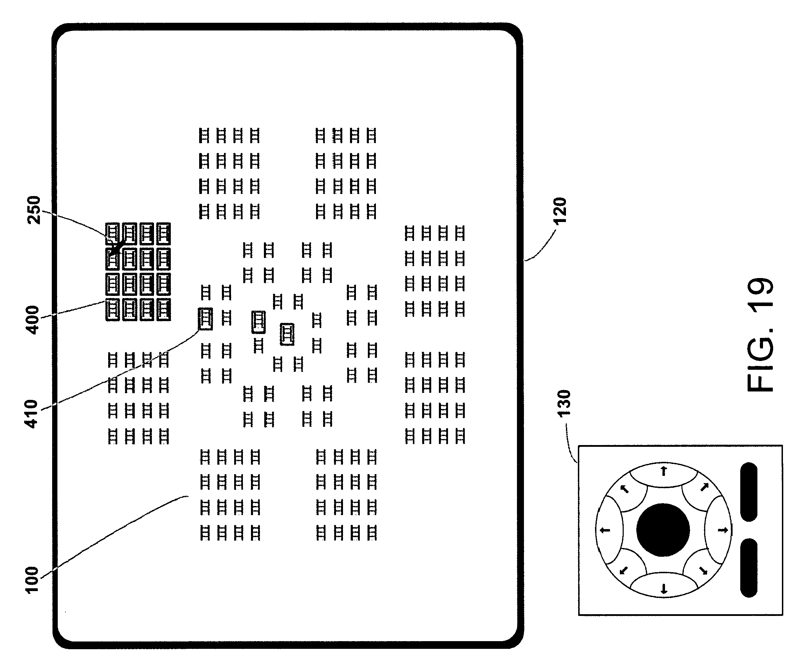

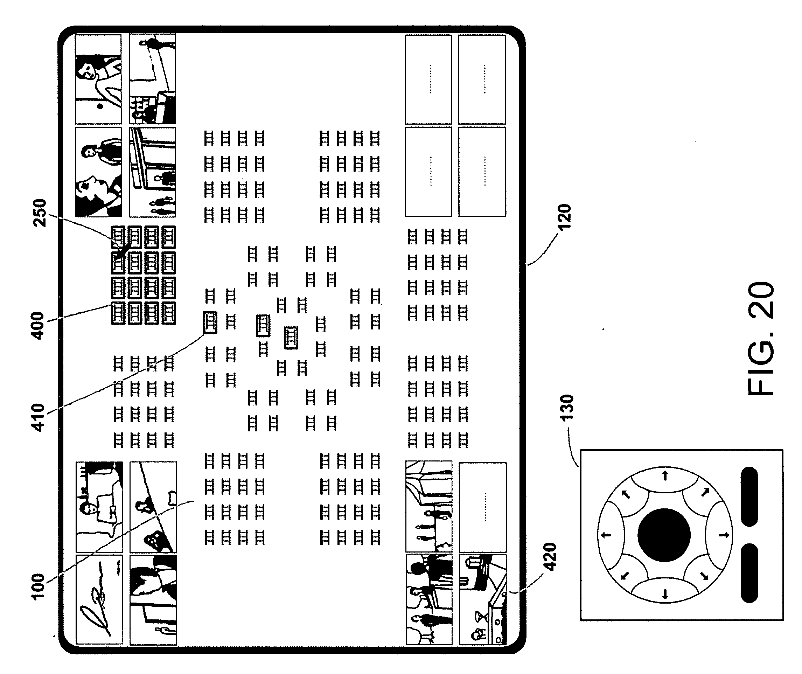

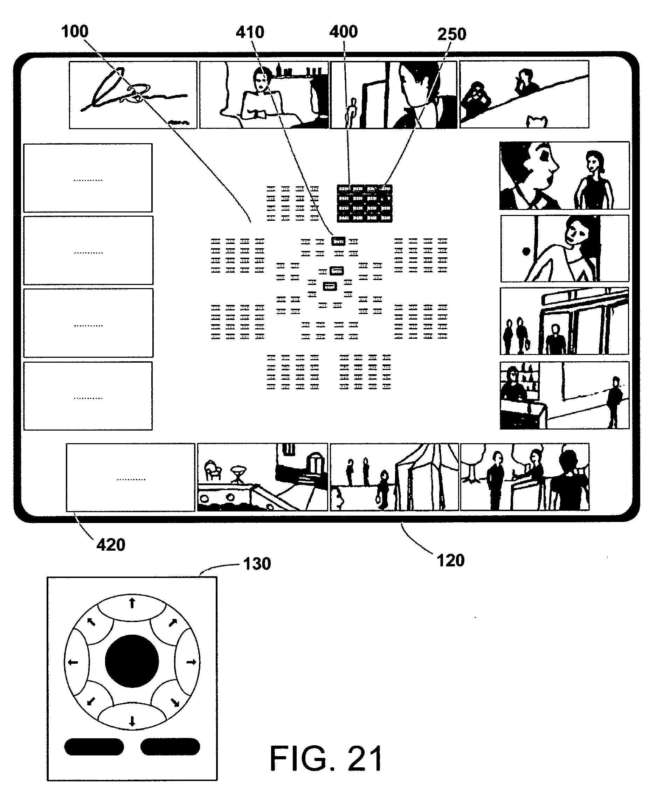

By controlling the cursor, the user may navigate to different parts of the symbolic representation space. As shown in Figure 19, when the cursor is held stationary for a certain amount of time, which may be user controlled, the data symbols **400** of the region within which the cursor lies become highlighted, for example drawing a rectangle around each one. Optionally, the data symbol closest to the cursor may be exceptionally highlighted, for example by drawing a rectangle of a specific colour. Optionally, data symbols **410** which belong to relevant regions may also be highlighted. The total number of data symbols that become highlighted may be user controlled. In another embodiment of the invention, the data symbols may be highlighted by using the appropriate selection button of the controller instead of or in addition to maintaining the cursor stationary for a certain amount of time. In any case, the user may view the data items that the highlighted symbols correspond to, for example as image or video thumbnails. This could be achieved by holding the cursor stationary for another certain amount of time after the data symbols become highlighted and/or by using the appropriate selection button of the controller. In one embodiment of the invention, the data items may replace the symbolic representation space. In a preferred embodiment of the invention, the data items are shown to the user in conjunction with the symbolic representation space. One example of this is shown in Figure 20, where large thumbnails **420** of the data items are displayed in an area of the display not occupied by the symbolic representation space. Alternatively, the data items may overlap the symbolic representation space display region. Another example is shown in Figure 21, where the symbolic representation space display region is reduced in order to allow larger and/or more data items to be displayed to the user. The data items may be ordered in any predetermined and user adjustable fashion.. Optionally, data symbols may be linked to data items, for example by drawing a rectangle of a distinct colour around each data symbol and its corresponding data item. In any case, users may continue to navigate the symbolic representation space so that new data symbols become highlighted and new data items are displayed in the place of the previous ones, and so on. At any point, users may change the focus of the cursor from the symbolic representation space to the data items by using the appropriate selection button. Users will then be able to select data items from the currently displayed data items in order to view them full-screen, initiate video playback, etc. Changing the focus of the cursor back to the symbolic representation space will then allow users to continue navigating said space and to view other data items.

Various extensions and modifications discussed for the previous browsing examples apply here as well.

In a preferred embodiment of the invention the symbolic representation space will not be static but will change in order to accommodate new data. Similarly, the symbols used to represent the data may change over time or according to the current view of the symbolic representation space. For example, less detailed symbols, such as points, could be used when viewing an entire heavily populated symbolic representation space, while more detailed symbols, such as dominant colour blocks, may be used when zooming in to view a smaller part of the whole symbolic representation space.

In an embodiment of the invention, the user need not be restricted to single symbolic representation space for browsing. For example, a user may browse the contents of a video as in Figures 17 to 21 to select a data item and then switch to a mutual similarity symbolic representation space for browsing, as in Figures 5 to 8, in order to find visually similar video segments.

In the previous examples, 2-dimensional symbolic representation spaces were considered for illustrative purposes and for the sake of convenience, since display **120** will commonly be 2-dimensional. It should be noted that the dimensionality of the symbolic representation space is separate from the dimensionality of the display. The symbolic representation space is an n-dimensional spatial arrangement of the symbols representing the data items, where *n* ≥ 1. Thus, in an embodiment of the invention, the symbolic representation space is a 1-dimensional symbol arrangement displayed on a 2-dimensional display. In another embodiment the symbolic representation space is a 3-dimensional symbol arrangement projected onto a 2-dimensional plane for display on a 2-dimensional display. In yet another embodiment, a 3-dimensional symbolic representation space is presented to the user on a 2-dimensional display as a set of 2-dimensional planes or slices. In yet another embodiment a 3-dimensional symbolic representation space is presented to a user on a 2-dimensional display as follows: A first dimension of the display is mapped to a first dimension of the space, a second dimension of the display is mapped to a second dimension of the space, and the third dimension of the symbolic representation space is represented by a changing attribute of the symbols in the space, e.g. larger or brighter symbols are "closer" to the user and smaller or darker symbols are "further away" from the user. Clearly, the invention may also be used in conjunction with other visualisation platforms, such as stereoscopic 3D displays or spatial 3D visualisation apparatuses.

In this specification, the term "image" is used to describe an image unit, including after processing, such as filtering, changing resolution, upsampling, downsampling, but the term also applies to other similar terminology such as frame, field, picture, or sub-units or regions of an image, frame etc. The terms pixels and blocks or groups of pixels may be used interchangeably where appropriate. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images.

Images may be grayscale or colour images, or another type of multispectral image, for example, IR, UV or other electromagnetic image, or an acoustic image etc.

The term "selecting means" can mean, for example, a device controlled by a user for selection, such as a controller including navigation and selection buttons, and/or the representation of the controller on a display, such as by a pointer or cursor.

The invention is preferably implemented by processing data items represented in electronic form and by processing electrical signals using a suitable apparatus. The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components, for example, over the internet.

## Claims

1. A method of browsing data items using an n-dimensional array of symbols, where n is greater than or equal to 1, each symbol corresponding to at least one data item, using selecting means movable through the n-dimensional array and capable of selecting points in the array including where no symbol is located, the method comprising selecting at least one symbol and the corresponding data item according to the location of the selecting means.

2. The method of claim 1 wherein at least two symbols and corresponding data items are selected according to the location of the selecting means.

3. A method of browsing data items using an n-dimensional array of symbols, where n is greater than or equal to 1, each symbol corresponding to at least one data item, using selecting means movable through the n-dimensional array, the method comprising selecting at least two symbols and the corresponding data items depending on the location of the selecting means.

4. The method of any preceding claim wherein the n-dimensional array of symbols is non-linear.

5. A method of browsing data items using an n-dimensional array of symbols, where n is greater than or equal to 1, each symbol corresponding to at least one data item, using selecting means movable through the n-dimensional array, wherein the n-dimensional array of symbols is non-linear, the method comprising selecting at least one symbol and the corresponding data item depending on the location of the selecting means.

6. The method of any preceding claim wherein one or more symbols and corresponding data items are selected based on predetermined criteria, such as proximity of the symbols to the location of the selecting means.

7. The method of any preceding claim further comprising displaying the selected data item(s).

8. The method of claim 7 wherein a plurality of data items are displayed in a predetermined order, for example, based on proximity of the respective symbols to the location of the selecting means.

9. A method of representing a plurality of data items using a plurality of symbols in an n-dimensional array, where n is greater than or equal to 1, each symbol corresponding to at least one data item, wherein the arrangement of the symbols in the array is non-linear.

10. A method of representing a plurality of data items using a plurality of symbols in an n-dimensional array, where n is greater than or equal to 1, each symbol corresponding to at least one data item, wherein the arrangement of the symbols in the array depends on at least one characteristic of the respective data item(s).

11. The method of any of claims 1 to 9 wherein the arrangement of the symbols in the array depends on at least one characteristic of the respective data item(s).

12. The method of claim 10 or claim 11 wherein the location of symbols in the array depends on said at least one characteristic of the respective data item(s).

13. The method of claim 11 or claim 12 wherein inter-relationships between symbols in the array depend on corresponding relationships of said at least one characteristic of the corresponding data items.

14. The method of any of claims 11 to 13 wherein similarity in location of symbols in the array represents similarity of the corresponding at least one characteristic of the corresponding data items.

15. The method of any of claims 11 to 14 wherein a characteristic of the data items is metadata such as time or place of data capture, occasion etc.

16. The method of any of claims 11 to 15 wherein a characteristic of the data items is intrinsic to the data item.

17. The method of claim 16 wherein the intrinsic data is based on, for example, colour, intensity, texture, object information or the like.

18. The method of claim 16 or claim 17 wherein the intrinsic data is based on, for example, absolute values, average values, dominant values etc.

19. The method of any of claims 11 to 18 wherein a characteristic of the data items is based on predetermined criteria, such as user- or designer-defined criteria.

20. The method of any of claims 11 to 19 wherein the arrangement of symbols is based on a numerical description of at least one characteristic.

21. The method of any preceding claim wherein the symbols comprise one or more of an icon, a single pixel, a group of pixels, a modified version of data item, such as subsampled or thumbnail version.

22. The method of any preceding claim wherein a characteristic of a symbol represents a characteristic of the corresponding data item.

23. The method of claim 22 wherein the colour of a symbol reflects colour of a corresponding visual data item.

24. The method of any preceding claim wherein the array comprises a plurality of different symbols.

25. The method of claim 24 wherein different symbols correspond to different types of data items.

26. The method of any preceding claim wherein data item comprises one or more of audio data and visual data, such as images or videos.

27. The method of any preceding claim wherein symbols and data items are displayed together.

28. The method of claim 27 wherein symbols and data items are displayed in separate regions of a display.

29. The method of claim 27 wherein symbols and data items are displayed in a common region of a display.

30. The method of claim 29 wherein symbols and data items are intermingled or overlap.

31. The method of claim 27 wherein the relative sizes of the regions occupied by the symbols and the data items is adjustable.

32. The method of claim 27 or claim 31 wherein the size of the region occupied by the symbols is smaller than the size of the region occupied by the data items.

33. The method of any preceding claim wherein data items are visually associated with respective symbols, for example, by edging respective data items and symbols with the same colour.

34. The method of any preceding claim wherein at least one symbol corresponds to a plurality of data items.

35. Control device programmed to execute the method of any preceding claim.

36. Apparatus adapted to carry out the method of any of claims 1 to 34.

37. Apparatus comprising a processor arranged to execute the method of any of claims 1 to 34, display means, selecting means and storage means storing data items.

38. Computer program for executing the method of any of claims 1 to 34 or a computer-readable storage medium storing such a computer program.
